(19) Europäisches Patentamt
European Patent Office
Office européen des brevets

(11) Publication number: **0 374 508 A2**

# (12) EUROPEAN PATENT APPLICATION

(21) Application number: 89121626.9

(22) Date of filing: 23.11.89

(51) Int. Cl.5: C08G 77/448

(30) Priority: 19.12.88 US 286674

(43) Date of publication of application: 27.06.90 Bulletin 90/26

(84) Designated Contracting States: DE FR GB IT NL

(71) Applicant: GENERAL ELECTRIC COMPANY
1 River Road
Schenectady New York 12305(US)

(72) Inventor: Silva, James Manio
8 Barkwood Lane
Clifton Park New York 12065(US)
Inventor: Pyles, Robert Allen
432 Galway Drive
Bethel Park Pennsylvania 15102(US)

(74) Representative: Catherine, Alain
General Electric France Service de Propriété Industrielle 18 Rue Horace Vernet
F-92136 Issy-Les-Moulineaux Cedex(FR)

## (54) Method for preparing polycarbonate-polysiloxane block copolymers.

(57) A method for preparing polycarbonate-polysiloxane copolymers by reacting oligomeric carbonate bischloroformate and oligomeric bisphenol A-terminated dimethylsiloxane in the presence of a polycarbonate formation catalyst, an organic liquid, and an aqueous phase containing an alkali metal or an alkaline earth metal base.

EP 0 374 508 A2

# METHOD FOR PREPARING POLYCARBONATE-POLYSILOXANE BLOCK COPOLYMERS

## Background of the Invention

This invention relates to a method for preparing polycarbonate-polysiloxane block copolymers. More particularly, it relates to a method for preparing polycarbonate-polysiloxane block copolymers from carbonate bischloroformate and bisphenol A-terminated diorganosiloxane.

Polycarbonate-polysiloxane block copolymers and methods for preparing them are known in the art. Reference is made, for example, to U.S. Patent Nos. 3,189,662, 3,379,790, 3,419,634, 3,419,635, 3,819,744, 3,821,325 and 4,657,989.

Polycarbonate-polysiloxane block copolymers have been conventionally prepared by reacting a bisphenol and a polysiloxane containing reactive end groups, such as halogen atoms or bisphenol A groups, in the presence of a carbonate source such as phosgene or a diaryl carbonate. This prior art method has several disadvantages resulting from its use of phosgene and bisphenol A. Phosgene is a dangerous material and its use imposes severe environmental and safety constraints on manufacturing sites, and bisphenol A, which has a very low solubility in organic media, must be dissolved in an organic phase, which tends to limit the overall reaction rate. It is desirable, therefore, to eliminate the use of these compounds in preparing the copolymers.

In another method for preparing polycarbonate-polysiloxane block copolymers, bisphenol A and a chloroformate-terminated siloxane oligomer are copolymerized in organic solution in the presence of an amine acid acceptor. This prior art method likewise has the disadvantage of requiring the dissolution of bisphenol A in an organic medium. Furthermore, the reaction time of this method is increased by the necessity of a multiple step process to form the chloroformate-terminated siloxane.

In another prior art method, the copolymers are prepared from bisphenol A-bischloroformate and the chloroformate of ethyl capped siloxane. However, extra steps are required to synthesize the chloroformate derivatives of bisphenol A and siloxane, thereby making this method time-consuming.

The copolymers may also be prepared by condensing OH-terminated bisphenol A-polycarbonate and Cl-terminated siloxane in the presence of an organic solvent and a tertiary amine. This prior art method is likewise time consuming, requiring about 4 hours for completion.

Although polycarbonate-polysiloxane block copolymers may be prepared by the methods discussed hereinabove, interest continues in preparing these copolymers by new methods which pose fewer safety and environmental hazards and have improved reaction rates.

## Summary of the Invention

A principal object of the present invention is to provide a new method for preparing polycarbonate-polysiloxane block copolymers.

Another object is to provide a method for preparing polycarbonate-polysiloxane block copolymers which poses fewer risks to safety and the environment.

A further object is to provide a method for preparing polycarbonate-polysiloxane block copolymers which is readily adaptable to continuous operation.

The objects of the invention are provided by a process which comprises reacting an oligomeric carbonate bischloroformate with an oligomeric bisphenol-A terminated diorganosiloxane in the presence of an interfacial polycarbonate formation catalyst, the ratio of chloroformate groups to hydroxyl groups being from about 1:1 to about 20:1.

Polycarbonate-polysiloxane copolymers can be prepared by

(1) mixing in the presence of a substantially inert, substantially water-insoluble organic liquid phase comprising an interfacial polycarbonate formation catalyst and in the presence of an aqueous phase comprising an alkali metal or an alkaline earth metal base.

(A) an oligomeric carbonate bischloroformate composition, and

(B) An oligomeric bisphenol A-terminated diorganosiloxane composition wherein (A) and (B) are present in a ratio of chloroformate groups per hydroxyl group ranging from about 1:1 to about 20:1 and

(2) agitating the mixture under conditions at least sufficient to prevent segregation of the aqueous and organic liquid phases and for a period of time sufficient to form polycarbonate-polysiloxane copolymers in

the organic liquid phase.

Preferably, the method further comprises separating the organic phase comprising the copolymer product from the aqueous phase, and washing the organic phase with acid to remove the catalyst and with deionized water to remove inorganic by-products.

The invention is based in part on the discovery of a high degree of reactivity between a polycarbonate containing chloroformate endgroups and a siloxane containing bisphenol A endgroups.

The copolymers produced by the method of this invention are used, for example, in insulating coatings, fibers, films, composite ingredients, protective coatings for resinous articles and elastomeric ingredients for adhesives.

## Detailed Description of the Invention

According to the method of the present invention, an oligomeric carbonate bischloroformate composition and an oligomeric bisphenol A-terminated diorganosiloxane composition are mixed in the presence of an interfacial polycarbonate formation catalyst, an organic liquid phase and an aqueous phase comprising an alkali or alkaline earth metal base.

The bisphenol A hereinafter referred to as BPA terminated diorganosiloxane composition comprises a mixture of BPA-terminated diorganosiloxane oligomers having the formula:

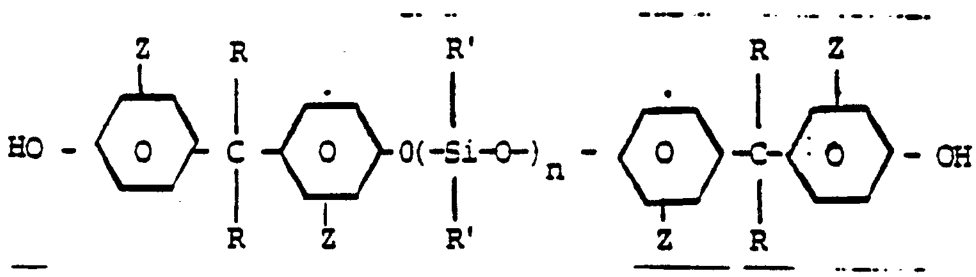

(I)

wherein n ranges from about 2 to about 40 and is preferably about 5-20; R is a member selected from the group consisting of hydrogen, monovalent hydrocarbon radicals and halogenated monovalent hydrocarbon radicals; R′ is a member selected from the group consisting of monovalent hydrocarbon radicals, halogenated monovalent hydrocarbon radicals and cyanoalkyl radicals; and Z is a member selected from the group consisting of hydrogen, lower alkyl radicals and halogen radicals. The carbon-chain length associated with the above mentioned hydrocarbon and alkyl groups is generally of the lower range, i.e., about 1 to 8 carbons.

Radicals represented by R include aryl radicals such as phenyl, xylyl, tolyl, etc; halogenated aryl radicals such as chlorophenyl, aralkyl radicals such as phenylethyl benzyl, aliphatic radicals such as alkyl, including methyl, ethyl, propyl, etc.; and alkenyl; haloaliphatic radicals such as haloalkyl, including chlorobutyl, and cycloaliphatic radicals such as cycloalkyl, including cyclohexyl, etc. R may be all the same radical or any two or more of the aforementioned radicals. Preferably, R is a lower alkyl radical having 1-8 carbon atoms.

R′ includes all radicals represented by R above except hydrogen and is also preferably an alkyl radical having 1-8 carbon atoms. R′ may be all the same radical or any two or more of the aforementioned R radicals except hydrogen. In addition to the radicals other than hydrogen represented by R, R′ also includes cyanoalkyl radicals such as cyanoethyl, cyanobutyl, etc.

Z includes hydrogen, methyl, ethyl, propyl, chloro, bromo, iodo, etc, and is preferably hydrogen.

In preferred embodiments, the concentration of hydroxyl groups in the BPA-terminated diorganosiloxane composition ranges from about 1% to about 6% by weight.

The BPA-terminated diorganosiloxanes can be prepared according to the method disclosed in U.S. Pat. No. 3,189,662 to Vaughan, Jr., at column 3, lines 20-62, which has been incorporated by reference herein. In that method, a halogenated polysiloxane and a polyhydric phenol are mixed in the presence of a tertiary amine at temperatures sufficient to effect reaction to form a polydiorganosiloxane which is chain-stopped by a substituted aryloxy-silicon linkage with dihydric phenol radicals. An inert organic solvent is used in the reaction mixture to facilitate product formation. Suitable organic solvents include chlorobenzene, methylene chloride, etc., or any organic solvent which is inert to the reactants and has a boiling point sufficiently high

so as to achieve satisfactory results. In addition to serving as an acceptor for by-product acid, a tertiary amine may also be used as a solvent for the reactants. Suitable tertiary amines include for example, pyridine, quinoline, tributylamine, etc. The temperature during the reaction is in the range of about 25° C to 100°C and preferably about 25°C to 75°C. At least about 0.15 part to about 3 parts of the halogenated polysiloxane per part of dihydric phenol may be used to form the BPA-terminated polydiorganosiloxane. The tertiary amine is present in an amount at least sufficient to remove all of the by-product acid formed.

The carbonate bischloroformate composition comprises a mixture of carbonate bischloroformate oligomers having the formula

$$Cl-\overset{O}{\overset{\|}{C}}-(-O-R-O-\overset{O}{\overset{\|}{C}}-)_mCl \quad (II)$$

wherein m ranges from about 1 to 10, preferably about 1 to 6 and most preferably about 1 to 4, and R is a divalent aromatic radical such as m-phenylene, p-phenylene, 4,4′-bisphenylene and 2,2-bis (4-phenylene) propane. Other suitable radicals are those which correspond to the dihydroxy compounds disclosed by name or formula in U.S. Pat. No. 4,217,438, the disclosure of which is incorporated by reference herein. Also included are radicals containing non-hydrocarbon moieties. These may be substituents such as chloro, nitro, alkoxy and the like and also linking radicals such as thio, sulfoxy, sulfone, ester amide, ether and carbonyl. Most often, however, all R radicals are hydrocarbon radicals.

The R radicals preferably have the formula

$$-A^1-Y-A^2- \quad (III)$$

wherein each of $A^1$ and $A^2$ is a single-ring divalent aromatic radical and Y is a bridging radical in which one or two atoms separate $A^1$ and $A^2$. The free valence bonds in formula II are usually in the meta or para-positions of $A^1$ and $A^2$. Such R values may be considered as being derived from bisphenols of the formula $HO-A^1-Y-A^2-OH$. Frequent reference to bisphenols will be made hereinafter, but it should be understood that R values derived from suitable compounds other than bisphenols may be employed as appropriate.

In formula III, the $A^1$ and $A^2$ may be unsubstituted phenylene radicals or substituted derivatives thereof, illustrative substituents being alkyl, alkenyl, e.g., crosslinkable-graftable moieties such as vinyl and allyl, halo, especially chloro and bromo, nitro, alkoxy and the like. Unsubstituted phenylene radicals are preferred. Both $A^1$ and $A^2$ are preferably p-phenylene, although both may be o- or m-phenylene or one o- or m-phenylene and the other p-phenylene.

The bridging radical Y, in Formula III is one in which one or two atoms, preferably one, separate $A^1$ from $A^2$. It is most often a hydrocarbon radical and particularly a saturated radical such as methylene, cyclohexylmethylene, 2-(2.2.1) -bicycloheptylmethylene, ethylene, isopropylidene, neopentylidene, cyclohexylidene, cyclopentadecylidene, cyclododecylidene or adamantylidene, especially a gemalkylene radical. Also included, however, are unsaturated radicals and radicals which are entirely or partially composed of atoms other than carbon and hydrogen. Examples of such radicals are 2,2-dichloroethylidene, carbonyl, thio and sulfone. For reasons of availability and particular suitability for the purposes of this invention, the preferred radical of formula III is the 2,2-bis (4-phenylene) propane radical, which is derived from bisphenol A and in which Y is isopropylidene and $A^1$ and $A^2$ are each p-phenylene.

In preferred embodiments, the number of chloroformate endgroups per mole of repeat unit in the carbonate bischloroformate composition ranges from about 0.05 to 2 and preferably about 0.2 to about 1.35.

The oligomeric carbonate bischloroformate composition can be prepared according to the method disclosed in U.S. Patent 4.737 573 to Silva et al. at column 2, lines 10 et seq., which is incorporated by reference herein. In that method, phosgene is passed into a heterogeneous mixture consisting essentially of water, a substantially inert, substantially water-insoluble organic liquid and at least one dihydroxyaromatic compound in a tank reactor. An aqueous alkali or alkaline earth metal base solution is simultaneously introduced at a rate to maintain the aqueous phase of the mixture at a pH in the range of about 8-11 and preferably about 8.5 - 10.5. The volume ratio of aqueous to organic phase at the conclusion of phosgenation should be in the range of about 0.4-1.0:1 and preferably about 0.5-1.0:1. The temperature of the mixture should be maintained in the range of about 15° - 50°C. The total amount of phosgene used is at least 1.1 mole per mole of dihydroxyaromatic compound. The reaction mixture is agitated under conditions sufficient to prevent segregation of the aqueous and organic liquid phases. Following completion of the reaction, the aqueous phase is preferably removed and the organic phase is washed free of inorganic by-products.

The carbonate bischloroformate composition may be used alone in the reaction mixture or in combination with a molecular weight control agent to form a partially capped bischloroformate composition. The preparation of the partially capped carbonate bischloroformate composition is also referred to herein as the "precapping step". The molecular weight control agent is a phenol or similar monohydroxyaromatic compound. Compounds of this type useful for regulating the molecular weight of polycarbonate are known in the art. Reference may be made, for example, to U.S. Patent 4,743,676, which is incorporated by

reference herein. Examples of molecular weight control agents are phenol, p-t-butylphenol, p-cumylphenol, octylphenol and nonylphenol. Phenol is often preferred by reason of its effectiveness. These monohydroxyaromatic compounds, when incorporated in minor proportions in the oligomer-forming reaction mixture, react with chloroformate-terminated oligomers to form inert aromatic end groups, incapable of further oligomerization. If desired, the monohydroxyaromatic compound may be introduced into the reaction mixture as a salt most often an alkali metal salt, for example, a sodium salt, e.g., sodium phenate and the like.

The partially capped bischloroformate composition may be prepared according to step A of the method disclosed in the above-referenced U.S. Patent 4,743,676.

The proportion of the monohydroxyaromatic compound with respect to bischloroformate will depend on the desired molecular weight and/or intrinsic viscosity of the polycarbonate product. About 0.5-7.0 mole percent monohydroxyaromatic compound, based on structural units in the bischloroformate composition, is typical. In the partially (generally about 2-5 mole percent) capped bischloroformate compositions by far the greater proportion of the capped molecules are monocapped and therefore still reactive at one end. Dicapped molecules would be inert to further reaction and have a low molecular weight compared to that of the polycarbonate desired in the polycarbonate-polysiloxane copolymer end product. Such molecules, if present in substantial proportions, might skew molecular weight determinations and also cause molding difficulties. However, it has been found that the proportion of dicapped species in the partially capped bischloroformate composition is not high enough to give rise to these problems.

In the reaction mixture prepared in step (1) of the method of the present invention, the carbonate bischloroformate composition and the bisphenol A-terminated diorganosiloxane composition are present in a ratio corresponding to at least one chloroformate group per hydroxyl group and not more than twenty chloroformate groups per hydroxyl group. Preferably, the chloroformate to hydroxyl group ratio is about 1.05:1 to about 5:1.

The interfacial polycarbonate formation catalysts useful in the method of this invention include oleophilic aliphatic or heterocyclic tertiary amines (i.e., those which are soluble in and highly active in organic media). Refer ence is made, for example, to the tertiary amines disclosed in U.S. Pat. Nos. 4,217,438 and 4,368,315, the disclosures of which are incorporated by reference herein. They include aliphatic amines such as triethylamine, tri-n-propylamine, diethyl-n-propylamine and tri-n-butylamine and highly nucleophilic heterocyclic amines such as 4-dimethylaminopyridine, which, for the purposes of this invention, contains only one active amine group. The preferred amines are those which dissolve preferentially in the organic phase of the reaction system; that is, for which the organic-aqueous partition coefficient is greater than 1. For the most part, such amines contain at least about 6 and preferably about 6-14 carbon atoms. The most useful amines are trialkylamines containing no branching on the carbon atoms in the 1- and 2- positions. Especially preferred are tri-n-alkylamines in which the alkyl groups contain up to about 4 carbon atoms. Triethylamine is most preferred by reason of its particular availability, and effectiveness in promoting reaction between chloroformate groups and hydroxyl groups. Also useful are quaternary ammonium and phosphonium salts and amidines of the type known in the art to be effective in the reaction of phosgene with bisphenols.

Suitable organic liquids include aliphatic hydrocarbons, such as hexane and n-heptane; chlorinated aliphatic hydrocarbons such as methylene chloride, chloroform, carbon tetrachloride, dischloroethane, trichloroethane, tetrachloroethane, dichloropropane and 1,2-dichloroethylene; aromatic hydrocarbons such as benzene, toluene, and xylene; substituted aromatic hydrocarbons such as chlorobenzene, o-dichlorobenzene, the chlorotoluenes, nitrobenzene and acetophenone; and carbon disulfide. The chlorinated aliphatic hydrocarbons, especially methylene chloride, are preferred.

The aqueous alkali or alkaline earth metal base used in the solution in the aqueous phase is most often a hydroxide such as sodium hydroxide, potassium hydroxide or calcium hydroxide. In relatively small scale reactions, especially those conducted batchwise, calcium hydroxide may be preferred since its limited solubility aids in stabilizing the pH in the range of about 11.8-12.3. Carbonates and bicarbonates may also be employed and frequently provide a degree of buffering which may be advantageous. Sodium and potassium hydroxide, and especially sodium hydroxide, are often preferred on a larger scale because of their relative availability and low cost.

According to the present invention, the copolymer-forming reaction is preferably conducted in a tank reactor. Such tank reactors include continuous-flow stirred reactors (hereinafter "CSTR's"), which are particularly useful when the reaction is conducted continuously as described hereinafter.

In the reactor, the BPA-terminated oligomeric siloxane composition and the oligomeric carbonate bischloroformate compositions are mixed in the presence of the interfacial polycarbonate formation catalyst, the organic liquid and an aqueous phase containing the alkali or alkaline earth metal acid acceptor. The

catalyst may be added to the mixture comprising the carbonate bischloroformate composition, the polydiorganosiloxane composition, and the organic liquid batch-wise or over a period of time ranging up to 1-20 minutes, with about 5-10 minutes being preferred. The amount of catalyst used is typically within the range of about 0.5-2 mole percent based on total bisphenol A present. The aqueous base may be simultaneously added to maintain an alkaline pH.

In general, the temperature at which the reactants are mixed and the resulting mixture maintained is in the range of about 15-100°C and preferably about 25-50°C. The pH of the aqueons phase, which is controlled by adding on alkalimetal or alkaline earth metal base to the phase, ranges from about 9 to about 13 and preferably about 11 to about 12. The volume ratio of aqueous to organic phase should be in the range of about 1:1. The reaction pressure is usually atmospheric, although sub- or super-atmospheric pressures may be used.

During the reaction, the mixture is agitated at a rate sufficient to prevent segregation of the aqueous and organic liquid phases. If segregation occurs, the reaction may be incomplete.

Agitation of the mixture is continued for a period of time sufficient to form the polycarbonate-polysiloxane copolymers in the organic liquid phase. Under normal conditions, reaction time is about 10-40 minutes.

At the end of the reaction, the organic phase is separated from the aqueous phase and washed with a strong mineral acid and deionized water to remove inorganic by-products. Suitable mineral acids include hydrochloric acid, sulfuric acid and nitric acid, with hydrochloric acid being preferred.

A principal advantage of the method of this invention is its adaptability to continuous operation. For this purpose, one or more CSTR's may be employed. In addition to conventional reagent introduction means including pH control, agitation means and operational heating or cooling and agitation facilitating means, such a reactor has an outlet port for the continuous removal of product. The outlet port is typically located on the perimeter of the reactor, at a distance from the bottom sufficient to provide the desired liquid holdup and residence time in the reactor. To avoid loss of volatile solvents by vaporization, it is frequently preferred that the outlet port have a suitable liquid seal, which may be provided by an inverted U-shaped bend or a similarly disposed right angle bend.

When a CSTR of the above-described design is used, there may be an interrelation between stirring rate and residence time. This is particularly true when the organic liquid employed is denser than water, as is true of methylene chloride and most other halogenated hydrocarbons. Under these conditions, if the stirring rate is too rapid a liquid-liquid centrifuge effect may cause premature discharge of a portion of the organic phase. It will be apparent that such premature discharge can be avoided by decreasing the stirring rate of the reaction mixture. This is another important reason why the stirring rate should not be excessive.

The invention is illustrated by the following examples.

In these examples, the BPA-terminated dimethyl-siloxane is 2.0 weight percent hydroxyl groups and exists as a 14 weight percent solution in methylene chloride. An oligomeric carbonate bischloroformate mixture having a composition as set forth in Table I below was used. Bischloroformate and monochloroformate are respectively designated "BCF" and "MCF". "BPA" refers to bisphenol A, and "BPA-DMS" to bisphenol A-terminated dimethylsiloxane. Based on the number in Table I, the average number of chloroformate endgroups per mol of repeat unit is 1.02. The chloroformate oligomer solution contains 1 mmol chloroformate per ml solution and virtually no hydroxyl groups.

TABLE I

| Component | Area % | mol/liter solution (repeat units) |
|---|---|---|
| BPA-MCF | 2.40 | 0.02 |
| BPA-BCF | 33.00 | 0.272 |
| Dimer-BCF | 2.30 | 0.025 |
| Dimer-BCF | 21.90 | 0.240 |
| Trimer-BCF | 16.10 | 0.176 |
| Tetramer-BCF | 10.00 | 0.110 |
| Pentamer-BCF | 6.40 | 0.070 |
| Hexamer-BCF | 4.90 | 0.054 |
| Heptamer-BCF | 3.00 | 0.033 |
| | 100.00 | 1.000 |

EXAMPLE 1

A 500 ml Morton flask was charged with 150 ml deionized $H_2O$. 2 gm $NaHCO_3$, 44 ml oligomeric carbonate bischloroformate mixture containing 44 mmol of bisphenol A groups, and 44.98 mg sodium phenate (NaOPH). The contents were stirred at 350 RPM and a heating mantle was activated to heat the contents to 30°C. The heating and stirring were continued for 10 minutes, during which time the sodium phenate reacted with chloroformate groups to form phenyl carbonate endcaps. During this "precapping" step of the process, the $NaHCO_3$ maintained the pH at approximately 8-9.

After the precapping step was complete, the heating mantle was disconnected, and 75 ml of BPA-capped polydimethylsiloxane oligomers (containing 16 mmol -OH groups and existing as a 14 weight % solution in $CH_2Cl_2$. with a degree of polymerization of 10) was added to the reactor along with 15 gm $Ca(OH)_2$. The stirring rate was increased to 650 RPM and catalyst addition was begun. The catalyst comprised 101 mg triethylamine ($Et_3N$) in 10 ml $CH_2Cl_2$ solution. The catalyst solution was added over a period of 5 minutes. At the end of the catalyst addition, the temperature had risen to 35.2°C. The reactor contents were sampled and analyzed by gel permeation chromatography (GPC) at 20 and 30 minutes, and the results are shown in Table II. These results show that the siloxane oligomers were incorporated into the polycarbonate.

TABLE II

| GPC RESULTS - EXAMPLE I | | | | |
|---|---|---|---|---|
| | | Area % | $M_w$* | $M_n$ |
| t=20 min | Copolymer | 62.8 | 80,200 | 43,200 |
| | BPA-DMS | 16.5 | | |
| | BCF | 21.2 | | |
| t=30 min | Polymer | 93.6 | 78,100 | 39,100 |
| | BPA-DMS | 4.6 | | |
| | BCF | 1.2 | | |

* Polycarbonate equivalent molecular weight

In Example I, there were 44 mmol repeat units of oligomeric carbonate bischloroformate mixture, which is equivalent to:

$$44 \text{ mmol repeat unit} \times \frac{1.02 \text{ mmol chloroformate endgroup}}{\text{mmol repeat unit}}$$

$$= 44.88 \text{ mmol chloroformate endgroups.}$$

The amount of endcap used was

$$\frac{44.98 \text{ mg NaOPh}}{116 \text{ mg/mol NaOPH}} = 0.38 \text{ mmol}$$

Thus, after endcapping, there were 44.50 mmol chloroformate groups remaining. 16 mmol hydroxyl groups were present in the siloxane composition, resulting in an initial chloroformate:hydroxyl group ratio of about 2.78:1.

EXAMPLE II

A 500 ml Morton flask was charged with 15 gm $Ca(OH)_2$ 150 ml deionized $H_2O$, 75 cc BPA-capped polydimethylsiloxane oligomer solution (same as above) and 101 mg triethylamine ($Et_3N$) catalyst in 10 ml $CH_2Cl_2$ solution. The two phase mixture was stirred at 650 RPM and 22 ml of bischloroformate solution in methylene chloride (22 mmol BPA groups) was added over a period of 7 minutes. When the bischloroformate (BCF) addition was begun, the heating mantle was activated; the heater was shut of after 5 minutes, at which time the temperature had risen from 21.2°C to 34.1°C. The reaction was sampled at 20, 30 and 60 minutes after the bischloroformate (BCF) addition was begun. The results of this reaction are shown in Table III.

In this example, there were 22 mmol repeat units or 22.44 mmol chloroformate endgroups. No endcapper was used since it was desired to use the bischloroformate oligomers to link BPA-terminated siloxane oligomers. The initial ratio of chloroformate to hydroxyl groups was about 1.40:1.

Comparison of the data in Tables II and III shows that a greater amount of copolymer is formed (i.e. more siloxane oligomers have been incorporated into the polycarbonate chain) at 30 minutes when a larger number of chloroformate groups per hydroxyl group are present, indicating a strong interreactivity between a polycarbonate having chloroformate endgroups and a siloxane with bisphenol A endgroups.

TABLE III

| GPC RESULTS - EXAMPLE II | | | | |
|---|---|---|---|---|
| | | Area % | $M_w$ | $M_n$ |
| t=20 min | Copolymer | 49.2 | 81,600 | 40,600 |
| | BPA-DMS | 7.9 | | |
| | BCF | 42.8 | | |
| t=30 min | Copolymer | 89.1 | 74,300 | 39,700 |
| | BPA-DMS | 8.5 | | |
| | BCF | 1.2 | | |
| t=60 min | Copolymer | 87.2 | 79,600 | 42,400 |
| | BPA-DMS | 11.6 | | |
| | BCF | - | | |

While the present invention has been described with reference to particular embodiments thereof, it will be understood that numerous modifications may be made by those skilled in the art without actually departing from the spirit and scope of the invention as defined in the appended claims.

## Claims

1. A process for making polycarbonate-polysiloxane block copolymer which comprises interfacial reaction of an oligomeric carbonate bischloroformate with an oligomeric bisphenol A-terminated diorganosiloxane in the presence of an interfacial polycarbonate formation catalyst the ratio of chloroformate groups to hydroxyl groups being from about 1:1 to about 20:1.

2. A method for preparing a polycarbonate-polysiloxane block copolymer according to claim 1 comprising:

(1) mixing in the presence of a substantially inert, substantially water-insoluble organic liquid phase comprising an interfacial polycarbonate formation catalyst and in the presence of an aqueous phase comprising an alkali metal or alkaline earth metal base.

(A) an oligomeric carbonate bischloroformate composition, and

(B) an oligomeric bisphenol A-terminated diorganosiloxane composition, wherein (A) and (B) are present in ratio of chloroformate group per hydroxyl group ranging from about 1:1 to about 20:1; and

(2) agitating the mixture under conditions at least sufficient to prevent segregation of the aqueous and organic liquid phases and for a period of time sufficient to form polycarbonate-polysiloxane copolymer in the organic liquid phase.

3. A method according to claim 2 wherein the oligomeric carbonate bischloroformate composition comprises compounds having the formula

$$Cl - \overset{O}{\overset{\|}{C}} - (- O - R - O - \overset{O}{\overset{\|}{C}} -)_m - Cl$$

wherein m ranges from about 1 to 10, preferably about 1 to 6 and most preferably about 1 to 4, and R has the formula $A^1$-Y-$A^2$-, wherein each of $A^1$ and $A^2$ is a single-ring divalent aromatic radical and Y is a bridging radical in which one or two atoms separate $A^1$ from $A^2$.

4. A method according to Claim 3 wherein R is 2,2-bis (4-phenylene) propane, in which Y is isopropylidene and $A^1$ and $A^2$ are each p-phenylene.

5. A method according to Claim 1 wherein the oligomeric bisphenol A-terminated diorganosiloxane composition comprises compounds having the formula

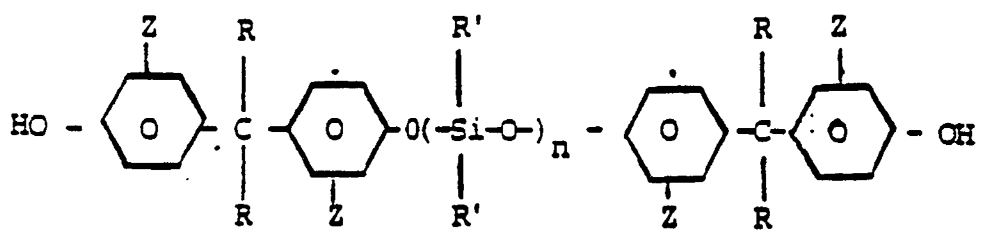

(I)

wherein n ranges from about 2 to 40, R is a member selected from the group consisting of hydrogen, monovalent hydrocarbon radicals and halogenated monovalent hydrocarbon radicals, Z is a member selected from the group consisting of hydrogen, lower alkyl radicals and halogen radicals, and $R'$ is a member selected from the group consisting of monovalent hydrocarbon radicals, halogenated monovalent hydrocarbon radicals and cyanoalkyl radicals.

6. A method according to claim 5 wherein $R'$ is a lower alkyl radical having 1-8 carbon atoms.

7. A method according to claim 1 wherein the reaction mixture contains a monohydroxyaromatic compound or salt.

8. A method according to claim 6 wherein the monohydroxyaromatic compound is phenol, p-t-butylphenol, p-cumylphenol, octylphenol, nonylphenol, or a salt thereof.

9. A method according to claim 2 wherein the organic liquid is methylene chloride.

10. A method according to claim 2 wherein the interfacial polycarbonate formation catalyst is a tertiary amine, quaternary ammonium or phosphonium salt or amidine.

11. A method according to claim 10 wherein the catalyst is a trialkylamine.

12. A method according to claim 9 wherein the tertiary amine is triethylamine.

13. A method according to claim 1 wherein the ratio of chloroformate groups per hydroxyl group ranges from about 1.05:1 to 5:1.

14. A method according to claim 2 wherein the pH of the aqueous phase of the mixture of step (1) is in the range about 9 to 13.

15. A method according to claim 13 wherein the pH is about 11 to about 12.

16. A method according to claim 1 wherein the temperature at which the reactants are mixed and the

resulting mixture maintained is in the range of about 15° to 100°C.

17. A method according to claim 16 wherein the temperature is in the range of about 25° to 50°C.

18. A method according to claim 1 wherein the amount of catalyst in the reaction mixture is in the range of about 0.5 to 2 mol percent based on total bisphenol A groups present.

19. A method according to claim 2 wherein the volumetric phase ratio of organic liquid phase to aqueous phase is about 1:1.

20. A method according to claim 1 further comprising separating the organic phase comprising the copolymer product from the aqueous phase, and washing the organic phase with mineral acid and deionized water to remove the inorganic by-products.

21. A method according to claim 20 wherein the mineral acid is hydrochloric acid, sulfuric acid or nitric acid.